# EUROPEAN PATENT APPLICATION

(11) **EP 4 056 907 A1**
(43) Date of publication of application: **14.09.2022**
(21) Application number: 20902390.2
(22) Date of filing: 14.12.2020
(51) Int. Cl.: F24D 3/14, F24D 13/02, E04C 2/52

(54) **CONCAVE AND CONVEX METAL PLATE AND FLOOR HEATING SYSTEM USING SAME**

(30) Priority: 17.12.2019 KR 20190169115; 11.12.2020 KR 20200173366
(71) Applicant: Lee, Ho-young, 302 Ansan-si, Gyeonggi-do 15257 (KR)
(72) Inventor: Lee, Ho-young, 302 Ansan-si, Gyeonggi-do 15257 (KR)
(74) Representative: Isarpatent
(86) International application number: PCT/KR2020/018215
(87) International publication number: WO 2021/125715

(57) **Abstract**

A concave-convex metal plate of a floor heating system according to the present disclosure includes repeatedly bent concave and convex portions to transmit a load from an upper portion of a finishing material to a floor slab. Because the concave-convex metal plate includes the repeatedly bent concave and convex portions , resistance to the load from the upper portion is significantly improved, thus functioning as a floor structural material that may sufficiently withstand the load, while transferring the load from the upper portion of the finishing material to the floor slab. A floor heating system according to the present disclosure includes an insulator preventing heat from a heating element from being transferred to a floor slab; a lower thermal diffusion plate positioned above the insulator and allowing heat conducted from the heating element to be transferred in a horizontal direction; a concavo-convex metal plate positioned above the lower thermal diffusion plate and accommodating the heating element; a heating element accommodated in a concave portion of the concavo-convex metal plate; and an upper thermal diffusion plate positioned above the concavo-convex metal plate and transferring heat conducted from the heating element in a horizontal direction and to a finishing material.

## Description

### [Technical Field]

1. The present disclosure relates to a concavo-convex metal plate and a floor heating system using the same and, more specifically, to a concavo-convex metal plate capable of receiving a heating element such as a heating tube or an electric heating cable, while being easily installed on the floor, and functioning as a platy structural component having improved load resistance due to concave portions and convex portions that are repeatedly formed, and a floor heating system using the same.

### [Background Art]

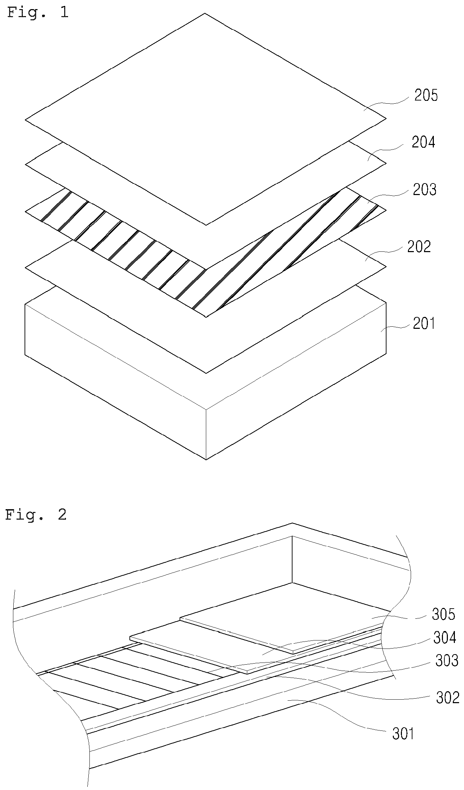

2. In general, when heating the floor, various materials are attached to the floor or laminated. According to the method of fixing the material to the floor, it is divided into two types: wet construction method and dry construction method. FIG. 1 illustrates an example of a dry construction method and FIG. 2 illustrates an example of a wet construction method.

3. In the dry construction method, as shown in FIG. 1, a heating insulator 202 is placed on a plaster floor 201, a heating film 203 and an adhesive protection plate 204 are disposed, and a finishing material 205 such as a decor tile is finally installed. Films or panels having a flat shape are simply stacked in order according to the function of materials by a heating film and ondol panel construction method.

4. In the wet construction method, as shown in FIG. 2, after foamed concrete 302 is cured with a thickness of about 50 mm on a floor slab 301, a heat transfer pipe 303 for heating is disposed thereon, a mortar 304 with a thickness of about 30 to 40 mm is cured again, which is finished with a finishing material 305. After the heat transfer pipe 303 for heating, such as an XL pipe, a metal pipe, or a cable, which has a round or long line shape is disposed and then is permanently fixed using cement mortar.

5. The heating material of the dry construction method is mainly in the form of a panel, and the heating material of the wet construction method is in the form of a pipe heating tube. As shown in FIG. 1, in the dry construction method, panel-type heating materials are combined or laminated on the floor according to the function to facilitate installation and dismantling, and in the wet construction method, fixing is permanently performed with cement mortar as shown in FIG. 2, which is relatively complicated in installation and dismantling.

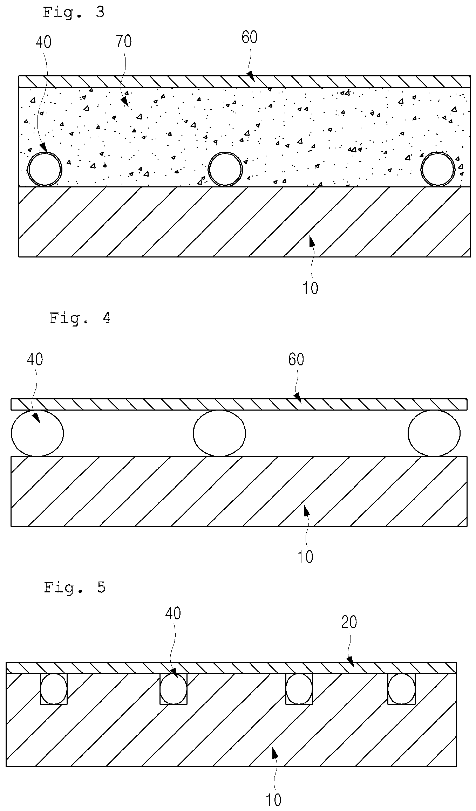

6. FIG. 3 is a cross-sectional view illustrating an example of a wet construction method. As shown, a heating tube 40 is disposed on an insulator 10 and is finished with a finishing material 60 such as a decorative tile or floor or linoleum in a state filled with mortar 70.

7. The present disclosure relates to improvement of many problems of wet construction by constructing heating materials such as an XL pipe, a metal pipe, and a cable having a round or long line shape of the heater, which have been constructed by a wet construction method, thereby facilitating installation and dismantling, ensuring a long lifespan and safety, shortening a construction period, being light in weight, and lowering a height.

### [Disclosure]

### [Technical Problem]

8. FIG. 5 is a view showing an example of a dry construction method which has been recently attempted in some cases. When constructing heating materials such as XL pipes, metal pipes, and cables which have a round or long line shape of the heater that have been constructed using the wet construction method, a frame is formed using an insulator 10 material such as a synthetic resin, Styrofoam and attached to the floor and a heating tube 40 such as a circular heater such as an XL pipe is fitted into the frame to be installed.

9. This dry construction method had the following problems.

10. First: Because the frame is formed using the insulator 10 material such as synthetic resin or Styrofoam, the frame is difficult to withstand a load and shrunken and deformed and the floor collapses.

11. Second: The synthetic resin type of insulator has a short lifespan of about 5 years when simply laminated. It is difficult to be semi-permanent for more than 30 years.

12. Third: In FIG. 5, the insulator 10 covers the bottom and three sides of the heating tube 40 on both sides, so that heat is diffused only to a top surface, so that heat diffusion efficiency is very low compared to an existing cement mortar covering the entire heating tube.

13. If the heat diffusion efficiency is poor, hot water supplied to the house, such as an apartment, through the heating tube 40 such as the XL pipe cannot enter the house but pass by within a time during which the hot water returns after entering the house, so more hot water is used and more hot water fee is charged, and thus, this method has not been widely used and constructed in apartments and the like.

14. There are four reasons why heating materials such as XL pipes, metal pipes, and cables, which have a round or long line shape of the heater, had to be constructed using the cement mortar wet method until now.

15. First: When a heating tube 40 such as an electric heater is installed on the insulator 10, as shown in FIG. 4, a space is formed between the heater and the heater, and for this reason, all the loads through the finishing material 60 from above press the heater, and there was nothing superior to cement as a material capable of withstanding this load.

16. Second: Heat conduction should be excellent and heat from the heating tube should be conducted quickly to come out of the room, but there was no material that could be installed so that it conducts heat better than cement.

17. Third: There was no material superior to cement with a lifespan of more than 30 years when installed.

18. Fourth: There is no method superior to cement mortar construction in a method known to many people, easy to understand and simple, and which anyone may implement, at a relatively low cost of construction.

19. An object of the present disclosure is to provide a floor heating system capable of exhibiting the advantages of the wet construction method while retaining the advantages of the dry construction method by developing a materials and a construction method having superior functions than the characteristics of cement mortar as described above.

### [Technical Solution]

20. In order to solve the above problems, the floor heating system of the present disclosure uses a metal plate having a thermal conductivity and fracture strength that is about 5 times higher than that of cement by processing a shape thereof to suit a floor heating structure.

21. Specifically, the metal plate is a concavo-convex metal plate, and concave portions and convex portions are formed to be repeatedly bent to transmit the load from an upper portion of a finishing material to a floor slab, and the concave portion is formed to have a size for receiving a linear heating element, while in contact with the linear heating element on a lower surface and left and right side surfaces.

22. Any one of a lower portion of the concave portion or an upper portion of the convex portion may be formed to have a flat surface, and the concave portion may be formed to be rounded so as to be in contact with lower portions of the left and right sides of the linear heating element.

23. In the concavo-convex metal plate, the concave portion and the convex portion may be formed in one direction or may be formed in both directions.

24. In addition, the concavo-convex metal plate is formed of a material selected from an iron plate, a color steel plate, a synthetic resin coated steel plate, a galvanized iron plate, a galvalume steel plate, a galvanized steel plate, a tin-plated iron plate, aluminum, duraluminium, an aluminum alloy plate, a copper plate, brass, and bronze.

25. The concavo-convex metal plate may be formed by any one of press forming, roller forming, gear forming, and extrusion forming.

26. A floor heating system according to the present disclosure includes: an insulator preventing heat from a heating element from being transferred to a floor slab; a lower thermal diffusion plate positioned above the insulator and allowing heat conducted from the heating element to be transferred in a horizontal direction; a concavo-convex metal plate positioned above the lower thermal diffusion plate and accommodating the heating element; a heating element accommodated in a concave portion of the concavo-convex metal plate; and an upper thermal diffusion plate positioned above the concavo-convex metal plate and transferring heat conducted from the heating element in a horizontal direction and to a finishing material.

### [Advantageous Effects]

27. In a construction method of a floor heating system so far, a wet construction method of permanently fixing the XL pipe using cement mortar has been the most widely used construction method for a floor heating system, but it has the following disadvantages.

28. First: It does not warm up quickly, resulting in a lot of energy wastage.

29. Second: A cement curing period is 7 days and a drying time is 30 days, so the construction period is too long. (If it is not dried, a final finishing material, such as floor, cannot be installed.)

30. Third: Higher than 50mm in height and heavy in weight.

31. Fourth: A thick and heavy floor plastering layer is difficult to install and dismantle, is a key factor in causing heavy noise, the biggest cause of noise between floors, and causes a lot of waste during dismantling.

32. When a floor heating system is constructed using the concavo-convex metal according to the present disclosure, the lifespan is long because the concavo-convex metal functions as a floor structure material, and the concavo-convex metal warms up quickly because heat conductivity thereof is high, and since a curing period is not required, the construction period is shortened. In addition, it is light since the material is light and a lamination height is low, and there is an effect that maintenance and repair are convenient. According to the concavo-convex metal plate and the floor heating system according to the present disclosure, both the problems in the wet construction as well as the problems in the dry construction of the floor heating system may be improved.

### [Description of Drawings]

33. FIG. 1 illustrates an example of a dry construction method.
34. FIG. 2 illustrates an example of a wet construction method.
35. FIG. 3 is a cross-sectional view showing an example of a wet construction method.
36. FIG. 4 is a cross-sectional view showing an example of dry construction.
37. FIG. 5 is a cross-sectional view showing an example of dry construction.
38. FIG. 6 is a perspective view of a concavo-convex metal according to the present disclosure.
39. FIG. 7 is a state diagram in which a heating element is accommodated in a concavo-convex metal plate according to the present disclosure.
40. FIG. 8 is a perspective view of a concavo-convex metal according to another embodiment of the present disclosure.
41. FIG. 9 is a cross-sectional view of a floor heating system according to the present disclosure.
42. FIG. 10 is a cross-sectional view of a floor heating system according to another embodiment of the present disclosure.
43. FIG. 11 is a perspective view of a floor heating system according to the present disclosure.
44. FIG. 12 is a conceptual diagram of gear forming in a method of manufacturing a concavo-convex metal plate according to the present disclosure.
45. FIG. 13 is a conceptual diagram of roller forming in a method of manufacturing a concavo-convex metal plate according to the present disclosure.
46. FIG. 14 is a conceptual diagram of press forming in a method of manufacturing a concavo-convex metal according to the present disclosure.

### [Mode for Disclosure]

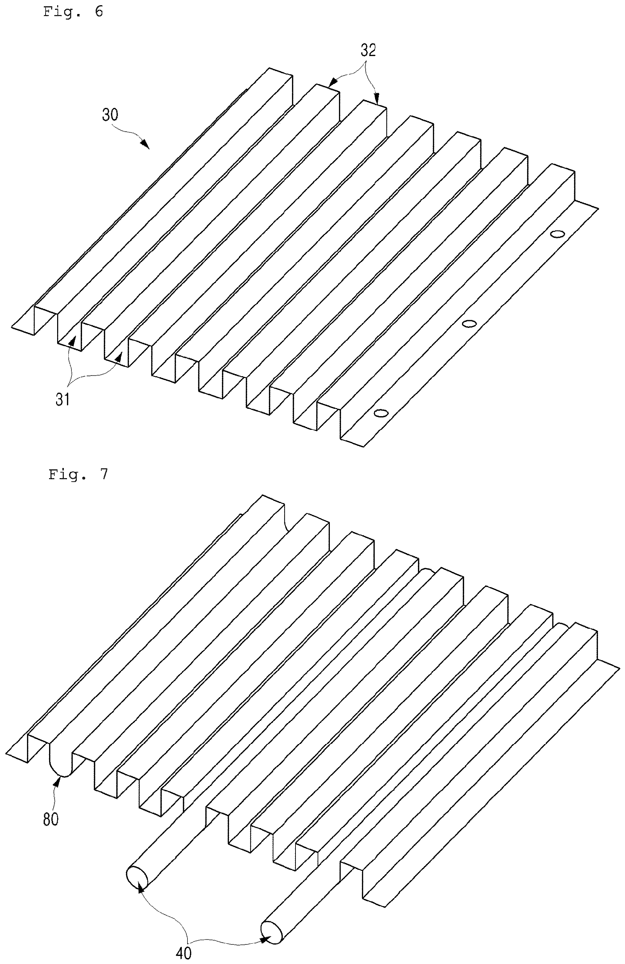

47. FIG. 6 shows a concavo-convex metal 30 of a floor heating system according to the present disclosure. In the concavo-convex metal plate 30 of the floor heating system according to the present disclosure, a concave portion 31 and a convex portion 31 are repeatedly formed to be bent to transfer a load from an upper portion of a finishing material to a floor slab. Because the concavo-convex metal plate has the repeatedly bent concave and convex portions, resistance to the load from the upper portion is remarkably improved, and it functions as a floor structural material that may withstand sufficient load while transferring the load from the upper portion of the finishing material to the floor slab.

48. As shown in FIG. 7, a linear heating element 40 is accommodated in the concave portion 30 of the concavo-convex metal plate 30, and heat is transferred from the linear heating element, while in contact with a lower surface and left and right sides with the linear heating element 40. In the present disclosure, the heating element 40 is a general name for a heating material that provides heat in a floor heating system while having a circular cross-section and a relatively long linear shape, and includes an XL pipe, a heating pipe, an electric heating cable, and the like. Since the concave portion of the concavo-convex metal plate and the heating element are in contact on the lower surface and left and right sides, heat may be transmitted very effectively from the heating element.

49. The concavo-convex metal plate 30 may be formed so that a lower portion of the concave portion or an upper portion of the convex portion has a flat surface. In the floor heating system according to the present disclosure, a thermal diffusion plate 20 is provided on the upper and lower portions of the concavo-convex metal plate. When the lower portion of the concave portion or the upper portion of the convex portion is formed to have a flat surface, the concavo-convex metal plate 30 and the thermal diffusion plate 20 may be in surface contact with each other to be combined more stably.

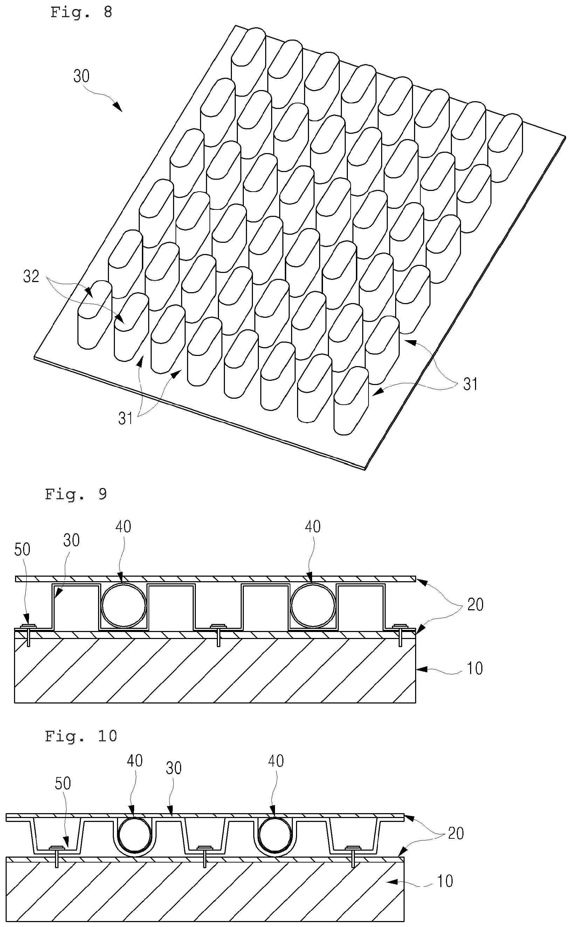

50. In addition, as shown in FIGS. 7 and 10, the concave portion of the concavo-convex metal plate may be formed to be rounded 80 so as to be in contact with the lower portions of the left and right sides of the linear heating element. If the concave portion is formed to be rounded, a contact surface with the heating element is widened, so that heat may be transmitted more effectively from the heating element.

51. In addition to this, in the concavo-convex metal plate according to the present disclosure, it is also possible to form only the concave portion in which the linear heating element is accommodated is rounded 80. That is, although depression and protrusions are repeatedly formed on the concavo-convex metal plate, the heating element is not accommodated in all concave portions and, since a concave portion in which the heating element should be accommodated and a concave portion in which the heating element is not accommodated among the concave portions of the concavo-convex metal plate may be planned in advance according to a total heating area, the type of heating element, and the degree of bending, only the concave portion in which the heating element is to be accommodated may be formed to be rounded 80.

52. Meanwhile, unlike the concavo-convex metal plate described so far in which the concave and convex portions are formed in one direction, the concave and convex portions may be continuously formed in both directions. FIG. 8 shows a concavo-convex metal plate in which concave portions and convex portions are continuously formed in both directions according to another embodiment of the present disclosure.

53. Since the heating element is accommodated along the concave portion, if the concave portion and the convex portion are formed in one direction, the direction for receiving the heating element is limited to one direction, but since the concave portion and the convex portion of the concavo-convex metal plate are formed in both directions as shown in FIG. 8, the heating element may be received in both directions, and therefore, an installation direction of the heating element may be more easily adjusted.

54. The concavo-convex metal plate according to the present disclosure may be formed of a material selected from iron plate, color steel plate, synthetic resin coated steel plate, galvanized iron plate, galvalume steel plate, galvanized steel plate, tin-plated iron plate, aluminum, duraluminium, aluminum alloy plate, copper plate, brass, and bronze.

55. The concavo-convex metal plate may be formed by any one of gear forming, roller forming, and press forming.

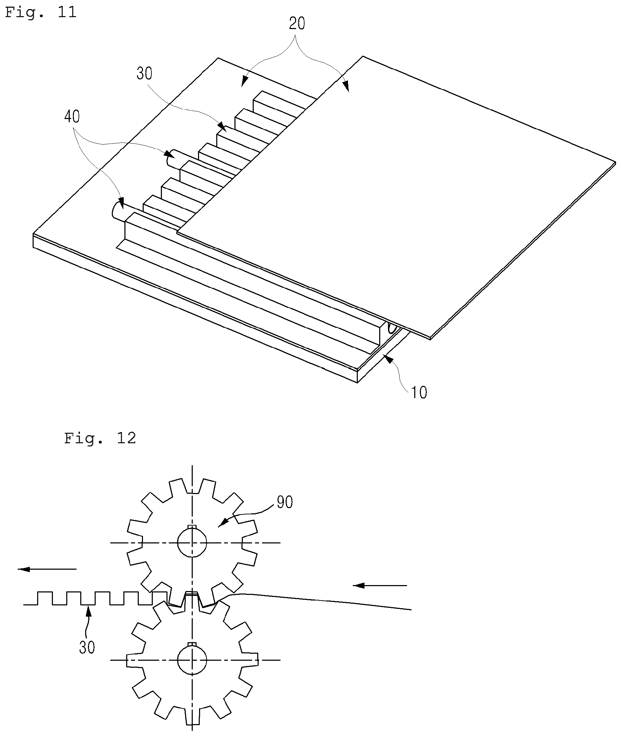

56. Gear forming is a method of arranging two gears 90 as shown in FIG. 12 and allowing a metal plate to pass through between the gears 90. In this method, the machine manufacturing cost is low, the productivity is good, and a steel plate structure is formed by the shape of a gear structure.

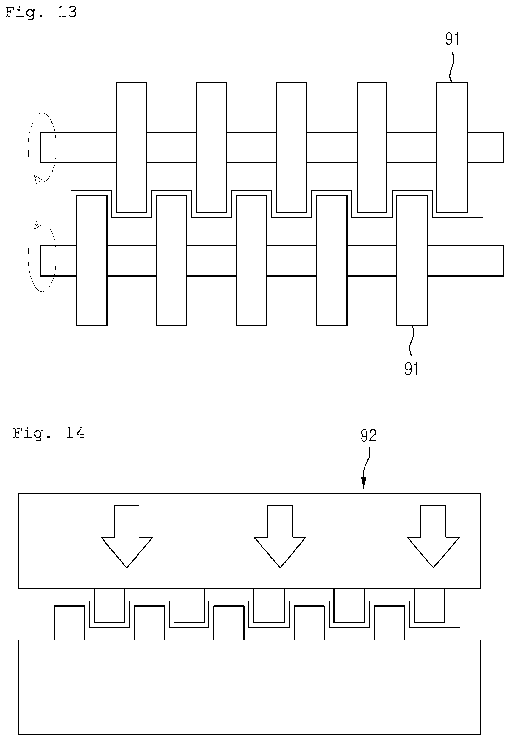

57. In roller forming, a continuous long iron plate having an appropriate size is transported as shown in FIG. 13, gradually and continuously formed through pressure of several stages so as to be curved or bent in a desired shape using a plurality of rollers 91, and cut to have an appropriate size.

58. Press forming is to manufacture a mold 92 having a concave-convex shape of a concavo-convex metal plate as shown in FIG. 14 and work through a press operation.

59. A method of constructing a floor heating system using a concavo-convex metal according to the present disclosure will be described. As a material for floor construction according to the present disclosure, 1: heating element 40, 2: thermal diffusion plate 20 having a width of 600 mm and a length of 600 mm, 3: silicone for bonding, 4: bolts 50 for iron plate , 5: concavo-convex metal plate 30 are required.

60. The construction process using this will be described. An insulator 10 is attached to a horizontally leveled floor slab by shooting silicone for bonding having a thickness of wooden chopsticks at intervals of about 200 mm. The insulator 10 prevents heat from a heating element from being transferred in the direction of the floor slab. The insulator 10 may be any type, but a hard compressed Styrofoam (isopink) type is preferable so as not to be compressed and contracted. Again, the silicone for bonding is shot on the insulator, and the lower thermal diffusion plate 20 is attached. After attaching the lower thermal diffusion plate 20 entirely to the floor, the concavo-convex metal plate 30 is attached with an adhesive. The heating element 30 is installed on the concavo-convex metal 20 according to an installation interval, and the heating element and the concavo-convex metal are fixed to the bottom of the iron plate by using the iron plate bolts 50. For a space of a portion where the heating element is bent and rotated, the concavo-convex metal plate is cut to fit the space and fixed in the space. After installing both the heating element and the concavo-convex metal, a gap between the heating element and the concavo-convex metal is filled with a curable mortar such as silicone, tile bond, or cement. When the gap filling process is finished, the adhesive silicone is shot at intervals of about 100 mm, and the upper thermal diffusion plate 20 of 600 mm in width and 600 mm in length is attached to the entire construction area with an interval of 1 to 2 mm. After attaching all of the upper heat diffusion plate, a finishing material is constructed on an upper portion of the upper heat diffusion plate, thereby completing the construction of the dry floor heating system according to the present disclosure.

61. The floor heating system of the present disclosure completed by such a construction method includes: an insulator 10 preventing heat from a heating element from being transferred to a floor slab; a lower thermal diffusion plate 20 positioned above the insulator and allowing heat conducted from the heating element to be transferred in a horizontal direction; a concavo-convex metal plate 30 positioned above the lower thermal diffusion plate and accommodating the heating element; a heating element 40 accommodated in a concave portion of the concavo-convex metal plate; and an upper thermal diffusion plate 20 positioned above the concavo-convex metal plate and transferring heat conducted from the heating element in a horizontal direction and to a finishing material.

62. In the present disclosure, the upper thermal diffusion plate and the lower thermal diffusion plate may be selected from metal panels such as galvalume steel plate, galva steel plate, color steel plate, tin-plated steel plate, galvanized steel plate, aluminum plate, stainless steel plate, copper plate, or the like, or selected from a synthetic resin panel, wood panel, and inorganic panel. In addition, by selecting the material of the upper heat diffusion plate and the material of the lower heat diffusion plate differently, the upper heat diffusion plate may be selected from metal panels, and the lower heat diffusion plate may be selected from synthetic resin panels, wood panels, and inorganic panels.

63. Since the concavo-convex metal plate has a three-dimensional structure with concave and convex portions to withstand pressure properly, it may sufficiently withstand a load of about 1 ton or more per 1 m² of weight of a refrigerator, etc., when installed as an ondol floor.

64. In addition, when having the same mass, the cement mortar has a heat storage capacity of about one-third or less of that of the metal and a thermal conductivity of one-fifth or sixth or less of that of the metal. When a plate-shaped structure is made of the metal having characteristics superior to cement and used in a heating system, heat of the heating element 40 may be transferred in four directions and thermal conductivity is 5 times faster than that of cement mortar, and therefore, the heat from the heating element conducts faster than the cement mortar floor and enters the room, increasing the efficiency of heat energy inflow by at least 2 to 3 times.

65. In addition, if the lifespan of floor heating with cement is more than 30 years, zinc plating, one of the materials of the concavo-convex metal, is plated with zinc, which has a faster ionization than the quality, on the iron plate to prevent oxygen corrosion, and thus, corrosive life is semi-permanent for more than 30 years and there is no difference from construction with cement mortar.

66. As a material for heat diffusion plate or concavo-convex metal plate, galvanized iron plate is the most common type of iron plate we see around us, dismantling is simple and recycling is possible, so there is less concern about waste generation.

67. The floor heating system according to the present disclosure may construct final finishing materials such as plywood flooring in just one day after construction, shortening the construction period, making it thinner and lighter in weight compared to conventional cement wet construction. Since all construction is completed in one day and the metal plate may be recycled after dismantling, it may solve the problems of conventional wet cement construction, such as reducing waste occurrence.

### [industrial Applicability]

68. The present disclosure is used in the field of floor heating industry, and by constructing a floor heating system using a concavo-convex metal plate, the construction efficiency and heating efficiency may be increased, while being simple.

## Claims

1. A concavo-convex metal plate in which concave and convex portions are repeatedly bent to transfer a load from an upper portion of a finishing material to a floor slab,
wherein the concave portion is formed to have a size for accommodating a linear heating element, while contacting the linear heating element on a lower surface and left and right sides.

2. The concavo-convex metal plate of claim 1, wherein any one of a lower portion of the concave portion or an upper portion of the convex portion is formed to have a flat surface.

3. The concavo-convex metal plate of claim 1, wherein the concave portion is rounded so as to be in contact with lower portions of the left and right sides of the linear heating element.

4. The concavo-convex metal plate of claim 1, wherein the concave and convex portions of the concave-convex metal plate are formed in both directions.

5. The concavo-convex metal plate of claim 1, wherein the concave-convex metal plate is formed of a material selected from an iron plate, a color steel plate, a synthetic resin coated steel plate, a galvanized iron plate, a galvalume steel plate, a galvanized steel plate, a tin-plated iron plate, aluminum, duraluminium, an aluminum alloy plate, a copper plate, brass, and bronze.

6. The concavo-convex metal plate of claim 1, wherein the concave-convex metal plate is formed by any one of gear forming, roller forming, and press forming.

7. A floor heating system comprising:
an insulator preventing heat from a heating element from being transferred to a floor slab;
a lower thermal diffusion plate positioned above the insulator and allowing heat conducted from the heating element to be transferred in a horizontal direction;
the concavo-convex metal plate of any one of claims 1 to 6, positioned above the lower thermal diffusion plate and accommodating the heating element;
a heating element accommodated in a concave portion of the concavo-convex metal plate; and
an upper thermal diffusion plate positioned above the concavo-convex metal plate and transferring heat conducted from the heating element in a horizontal direction and to a finishing material.

8. The floor heating system of claim 7, wherein the lower thermal diffusion plate or the upper thermal diffusion plate is selected from a metal panel such as a galvalume steel sheet, a galvanized steel sheet, a color steel sheet, a tin-plated steel sheet, a galvanized steel sheet, an aluminum sheet, a stainless steel sheet, a copper sheet, or a synthetic resin panel, a wood panel, an inorganic panel.
